(19) Europäisches Patentamt / European Patent Office / Office européen des brevets

(11) **EP 3 771 883 A2**

(12) **EUROPEAN PATENT APPLICATION**

(43) Date of publication:
03.02.2021 Bulletin 2021/05

(21) Application number: 20188443.4

(22) Date of filing: 29.07.2020

(51) Int Cl.:
*G01B 9/00* *(2006.01)*       *G02B 27/42* *(2006.01)*
*H01S 3/00* *(2006.01)*       *H01S 5/00* *(2006.01)*
*G02B 17/00* *(2006.01)*      *G02B 5/18* *(2006.01)*
*G02B 17/02* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 30.07.2019   JP 2019139879
08.05.2020   JP 2020082546

(71) Applicant: **CANON KABUSHIKI KAISHA Ohta-ku Tokyo 146-8501 (JP)**

(72) Inventor: **OTA, Takefumi Tokyo 146-8501 (JP)**

(74) Representative: **WESER & Kollegen Patentanwälte PartmbB Radeckestraße 43 81245 München (DE)**

(54) **DISPERSIVE OPTICAL DEVICE**

(57)    An optical device disperses a wavelength of light and includes: a dispersion element configured to transmit incident light and disperse the incident light so that an optical path is different for each wavelength and to generate first dispersed light; and a reflection unit including four reflection surfaces sequentially reflecting the first dispersed light. The first dispersed light sequentially reflected from the four reflection surfaces is incident on the dispersion element and is transmitted through the dispersion element.

FIG. 1

**Description**

BACKGROUND OF THE INVENTION

Field of the Invention

The present invention relates to an optical device.

Description of the Related Art

When the optical intensity of short pulse light is amplified, a method such as chirped pulse amplification is used. In chirped pulse amplification, after a wavelength dispersion is given to pulsed light and a time width is widened, the pulsed light is amplified and a wavelength dispersion opposite to the earlier given wavelength dispersion is given to temporally compress the pulsed light.

In an optical coherence tomography (OCT), a signal is obtained based on an interferometer using wideband light. At this time, by substantially matching a wavelength dispersion of backscattered light radiated to and turned back from a measurement target with a wavelength dispersion of reference light for interference, it is possible to obtain high resolution. In this way, in a field in which short pulsed light or wideband light is used, it is necessary to control amounts of the wavelength dispersions.

In the related art, as a method of controlling a wavelength dispersion, there is a method in which diffraction gratings are used. In general, a configuration in which two diffraction gratings are disposed in parallel is taken. A configuration is disclosed in Japanese Unexamined Patent Publication No. 2007-67123. In Japanese Unexamined Patent Publication No. 2007-67123, a roof mirror in a horizontal direction and a roof mirror in a vertical direction are disposed.

In a wavelength dispersion control device of the related art, however, a reflective diffraction grating is used and a corner mirror is used for turning light back. Therefore, incident light and diffracted light may be shifted in the horizontal direction and there is a problem that a horizontal width of the diffraction grating increases.

SUMMARY OF THE INVENTION

An embodiment of the present invention provides an optical device advantageous in terms of miniaturization and cost.

The present invention in its first aspect provides an optical device as specified in claims 1 to 10. The present invention in its second aspect provides a pulse control device as specified in claim 11. The present invention in its third aspect provides a processing device as specified in claims 12 and 13. The present invention in its fourth aspect provides an interferometer as specified in claims 14 and 15.

Further features of the present invention will become apparent from the following description of exemplary embodiments with reference to the attached drawings.

BRIEF DESCRIPTION OF THE DRAWINGS

Fig. 1 is a diagram illustrating a wavelength dispersion device according to a first embodiment and Example 1.
Figs. 2A and 2B are diagrams illustrating positions of incidence of incident light and dispersed light on a surface of a dispersion element according to the first embodiment.
Fig. 3 is a schematic diagram illustrating a wavelength dispersion device according to Example 2 based on the first embodiment.
Fig. 4 is a schematic diagram illustrating a wavelength dispersion device according to Example 4 based on the first embodiment.
Fig. 5 is a schematic diagram illustrating a wavelength dispersion device according to Example 5 based on the first embodiment.
Fig. 6 is a schematic diagram illustrating a wavelength dispersion device according to another example of Example 5 based on the first embodiment.
Figs. 7A and 7B are diagrams illustrating positions of incidence of incident light and dispersed light on a surface of a dispersion element according to a second embodiment.
Figs. 8A to 8C are diagrams illustrating a wavelength dispersion device according to a third embodiment and Example 7.
Fig. 9 is a schematic diagram illustrating a processing device according to Example 8 based on a sixth embodiment.

Fig. 10 is a schematic diagram illustrating an optical coherence tomography according to a seventh embodiment.
Fig. 11 is a diagram illustrating a wavelength dispersion measurement device according to an eighth embodiment.
Figs. 12A and 12B are schematic diagrams illustrating principles that give abnormal dispersion and normal dispersion.
Fig. 13 is a schematic diagram illustrating a wavelength dispersion measurement device according to a fifth embodiment.

DESCRIPTION OF THE EMBODIMENTS

Hereinafter, modes for carrying out the present invention will be described in detail with reference to the drawings.

<First embodiment>

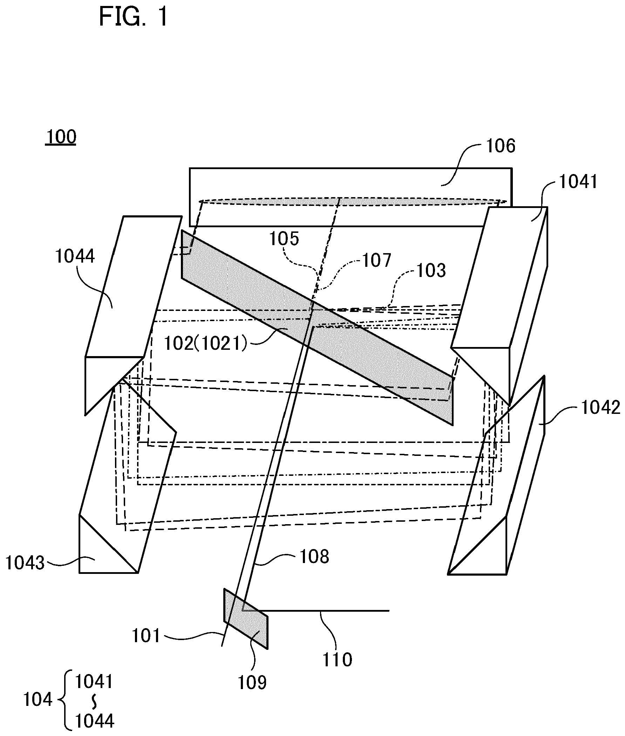

Fig. 1 is a diagram illustrating a wavelength dispersion device (an optical device) 100 according to a first embodiment and Example 1. The wavelength dispersion device 100 includes a dispersion element 102, light guiding optical system 104, a turnback mirror 106, and an edge mirror 109.
Incident light 101 from a light source (not illustrated) is incident on the dispersion element 102. The incident light 101 which has been incident is dispersed spatially by the dispersion element 102 in accordance with a wavelength. In the embodiment, a transmissive diffraction grating 1021 is used as the dispersion element 102. Here, the present invention is not limited to the transmissive diffraction grating and a prism, a grism, or the like may be used. The dispersion element 102 transmits and disperses the incident light so that an optical path is different for each wavelength, and generates dispersed light 103 (first dispersed light). The dispersed light 103 propagates in the light guiding optical system 104 (reflection unit) and is radiated to the dispersion element 102. The light guiding optical system 104 includes a plurality of reflection surfaces that sequentially reflect the dispersed light 103. In the embodiment, four mirrors, a first mirror 1041, a second mirror 1042, a third mirror 1043, and a fourth mirror 1044, are used as the plurality of reflection surfaces. Subsequently, the dispersed light 103 propagating in the light guiding optical system 104 is incident on the dispersion element 102 and transmits through the dispersion element 102 so that the dispersed light 103 becomes parallel light 105 (second dispersed light) after transmitting through the dispersion element 102.

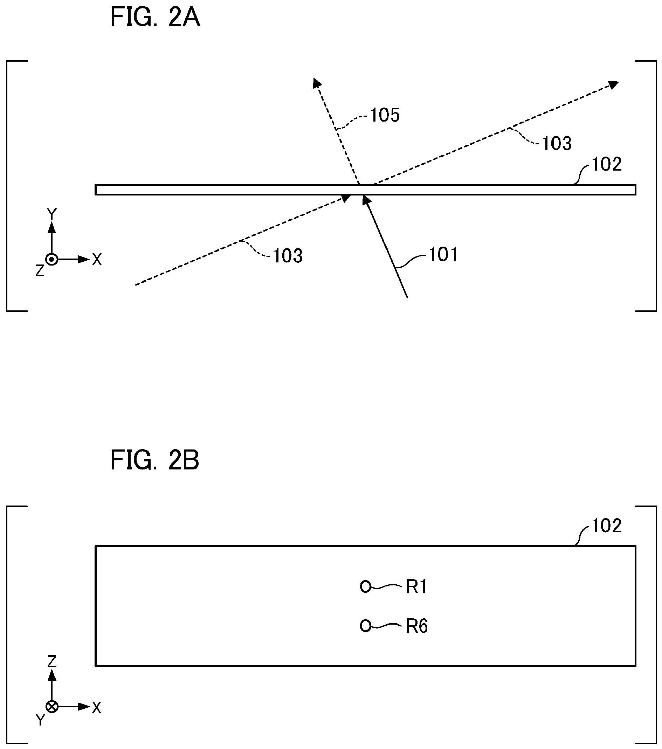

Figs. 2A and 2B are diagrams illustrating positions of incidence of incident light 101 and the dispersed light 103 on a surface of the dispersion element 102 according to the first embodiment. Here, a direction in which light is dispersed spatially on the surface of the dispersion element 102 is referred to as the horizontal direction (herein, the X direction) and a direction (herein, the Z direction) perpendicular to the horizontal direction is referred to as the vertical direction. Fig. 2A is a diagram illustrating the dispersion element 102 when viewed in the Z direction. Fig. 2B is a diagram illustrating the dispersion element 102 when viewed in the Y direction which is a direction perpendicular to the horizontal and vertical directions. In Fig. 2B, R1 indicates a point at which the incident light 101 is incident on the surface of the dispersion element 102. R6 indicates a point at which the dispersed light 103 is incident on the surface of the dispersion element 102. As illustrated in Figs. 2A and 2B, the transmissive dispersion element 102 is used and the dispersed light 103 is incident on the dispersion element 102 so that the dispersed light 103 overlaps at least a part of the incident light 101 in the horizontal direction and does not overlap the incident light 101 in the vertical direction on the surface of the dispersion element 102. Here, since the transmissive diffraction grating 1021 is used as the dispersion element 102, the positions of incidence of the incident light 101 and the dispersed light 103 on the surface of the dispersion element 102 have been mentioned. However, when a grism is used as the dispersion element 102, the "surface" in the above description is replaced with the "inside."
The dispersed light 103 transmitting through the dispersion element 102 becomes the parallel light 105, and the parallel light 105 is reflected by the turnback mirror 106 and thus becomes propagating turnback light 107. The turnback light 107 is reflected and propagates without changing an angle with the parallel light 105 in the horizontal direction. The turnback light 107 is reflected with its angle slightly changed in the vertical direction. Then, the turnback light 107 is radiated to the dispersion element 102, propagates in the light guiding optical system 104, is incident on the dispersion element 102 again, and propagates as dispersed light 108. The dispersed light 108 is turned back with its angle changed in the vertical direction by the turnback mirror 106 and propagates at a position slightly different from that of the incident light in the vertical direction from the dispersion element 102. An edge mirror 109 is used to receive the dispersed light 108 and output emitted light 110.
In the embodiment, the width of the dispersion element in the horizontal direction can be narrower than previously. Thus, it is possible to reduce the size of the entire wavelength dispersion device. By reducing the size of the dispersion element, it is possible to achieve low cost.

(Example 1)

Example 1 will be described with reference to Fig. 1. In the example, the transmissive diffraction grating 1021 is used as the dispersion element 102. The incident light 101 is pulsed light with a central wavelength of 1030 nm and a spectral width of 10 nm. The light propagates about 2 km and spreads about 1 nsec through an optical fiber with a dispersion parameter D of about -43 [ps/nm/km].

The diffraction grating 1021 used as the dispersion element 102 has a grating density of 1740 pieces/nm. The diffraction grating of which a width in the horizontal direction is 180 mm and a width in the vertical direction is 60 mm is used. An incident angle of the incident light 101 is about 63.5 degrees. The light is incident parallel to a groove structure of the diffraction grating 1021 and downwards by about 0.25 degrees from the plane of the diffraction grating 1021. When a pair of diffraction grating which are two parallel diffraction gratings are used to compensate for wavelength dispersion of pulsed light spread about 1nsec, a distance between the two diffraction gratings which are parallel is about 317 mm. An optical path length of the central wavelength at the time of reception of the dispersed light 103 is about 745 mm. A necessary width of the diffraction grating in the horizontal direction is 145 mm. Thus, four mirrors that are the first mirror 1041, the second 1042, the third mirror 1043, and the fourth mirror 1044, are used for the light guiding optical system 104.

The dispersed light 103 is reflected in a direction substantially at a right angle with respect to a direction in which the light propagates due to the first mirror 1041. Here, the first mirror 1041 is disposed so that the dispersed light is also reflected in a direction at a right angle with respect to a direction in which the light is dispersed (the horizontal direction). The dispersed light 103 reflected by the first mirror 1041 is reflected by the second mirror 1042 to be guided to the third mirror 1043. The light reflected by the third mirror 1043 is reflected by the fourth mirror 1044 to be guided to the diffraction grating 1021 and incident on the diffraction grating 1021. At this time, the dispersed light 103 guided to the diffraction grating 1021 is guided under the same conditions as the conditions that the light is radiated to the second diffraction grating when the pair of diffraction gratings which are two parallel diffraction gratings are used. When a direction in which light is dispersed spatially on the surface of the diffraction grating 1021 is referred to as the horizontal direction and a direction perpendicular to the horizontal direction is referred to as the vertical direction, the light may have an angle under the condition that the light is not totally reflected in the vertical direction of the diffraction grating 1021.

In the embodiment, the incident light 101 and the dispersed light 103 are incident on the diffraction grating 1021 so that the incident light 101 and the dispersed light 103 deviate by 10 mm in the vertical direction. An optical path length in which the dispersed light 103 is dispersed by the diffraction grating 1021, propagates in the first mirror 1041 to the fourth mirror 1044, and is incident on the diffraction grating 1021 is about 745 mm. The optical path length can be adjusted by moving at least one of the first mirror 1041 to the fourth mirror 1044. Accordingly, the light guiding optical system 104 preferably includes, for example, a driving mechanism that drives reflection surfaces of the first mirror 1041 to the fourth mirror 1044. The driving mechanism may be able to move at least one of the first mirror 1041 to the fourth mirror 1044 or may be individually provided in each mirror. Alternatively, one driving mechanism may be included for a plurality of mirrors.

The dispersed light 103 incident on the diffraction grating 1021 transmits through the diffraction grating 1021, is emitted as the parallel light 105, and is reflected by the turnback mirror 106. At this time, the dispersed light is reflected with no change in its angle in the horizontal direction. Since the light is incident downwards by only 0.25 degrees in the vertical direction, the light is incident downwards by only 0.25 degrees with respect to the vertical surface of the mirror surface and is reflected downwards by only 0.25 degrees.

The reflected light propagates in an opposite direction slightly below the optical path in which the light travels toward the turnback mirror 106 and propagates twice more through the diffraction grating 1021. The light has a spot diameter equal to that of the incident light 101 again. Since the light is reflected downwards at only 0.5 degrees which is a sum of the incidence and the reflection by the turnback mirror 106, the light propagates downwards about 7 mm with respect to the incident light in the diffraction grating 1021. Further, the incident light is not blocked and the light is reflected to obtain the emitted light 110 by the edge mirror 109 provided at a position 50 mm away from the diffraction grating 1021.

(Example 2)

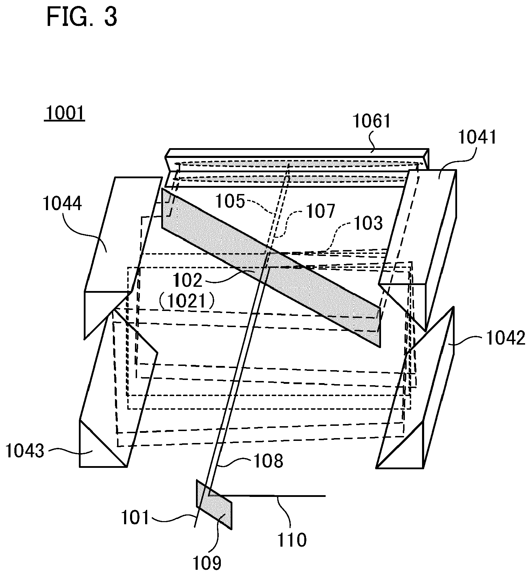

Although one mirror is used as the turnback mirror 106 in Example 1, it is more preferable to dispose two mirrors or a right-angle prism disposed at a right angle as the turnback mirror 106 to turn back while changing a height. Fig. 3 is a schematic diagram illustrating a wavelength dispersion device 1001 according to Example 2 based on the first embodiment. In the wavelength dispersion device 1001 according to Example 2, a right-angle prism 1061 is used as a turnback mirror. When the right-angle prism 1061 is used as the turnback mirror, optical axes of light radiated to the right-angle prism 1061 and the turnback light can be parallel. The edge mirror 109 is used to output the emitted light 110, but a half mirror or a circulator may be used. A polarization beam splitter and a quarter-wave plate are configured as an example of a circulator. Thus, since it is not necessary to take into account that an edge mirror may overlap the incident light, adjustment is simplified.

(Example 3)

In the above-described examples, four mirrors (the first mirror 1041 to the fourth mirror 1044) have been used in the light guiding optical system 104, but the light guiding optical system 104 may be configured using three mirrors to adjust an angle at which the dispersed light 103 is incident on the dispersion element 102 and is radiated. The light guiding optical system 104 may also be configured using two mirrors. Thus, it is possible to reduce the number of reflections and it is possible to reduce cost and reduce an optical loss due to the reduction in the number of mirrors.

(Example 4)

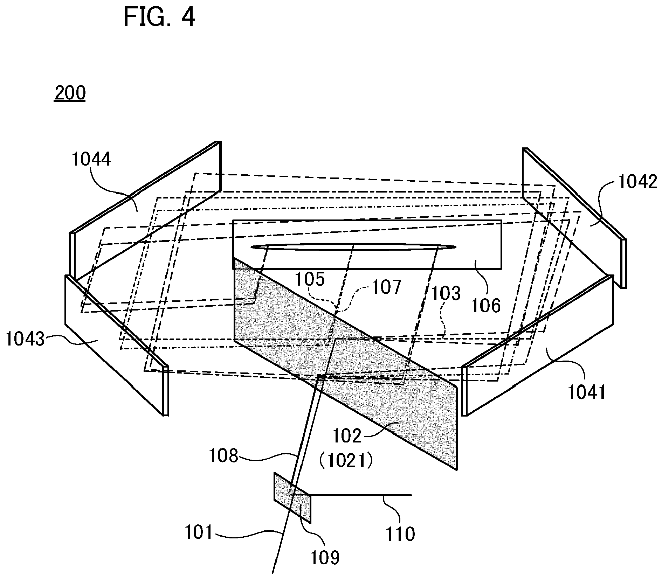

Fig. 4 is a schematic diagram illustrating a wavelength dispersion device 200 according to Example 4 based on the first embodiment. In the above-described examples, the dispersed light 103 has been configured to be reflected from the first mirror 1041 in the direction at a right angle with respect to both the directions in which the light propagates and the direction in which the right is dispersed (the horizontal direction). However, in a wavelength dispersion device 200 according to this example, light may be turned back on the same plane as the plane on which the light is dispersed, as illustrated in Fig. 4. Thus, a dispersion control device with a reduced height can be provided.

(Example 5)

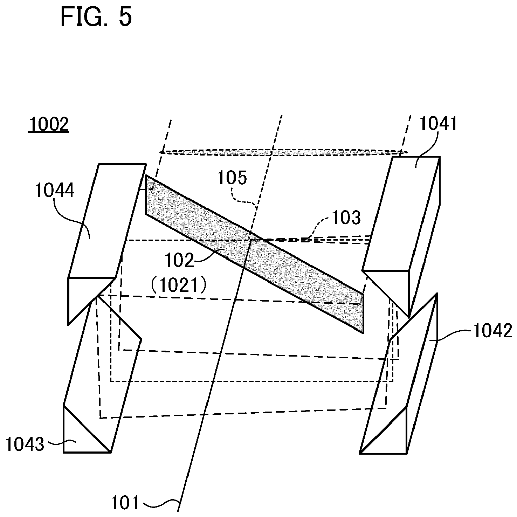

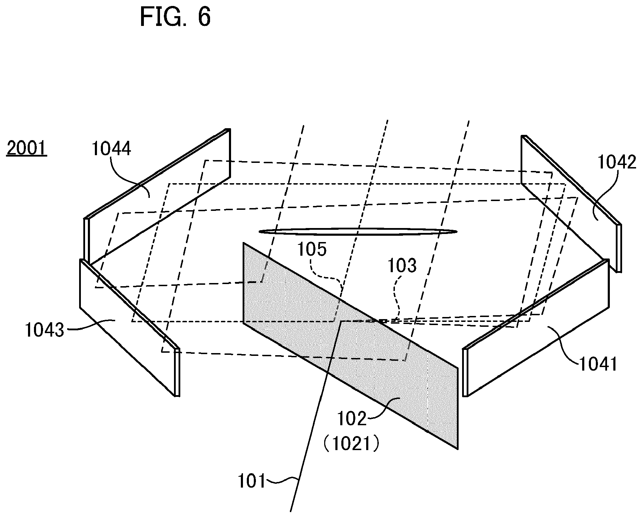

In this example, a configuration in which the turnback mirror 106 is removed will be described. Fig. 5 is a schematic diagram illustrating a wavelength dispersion device 1002 according to Example 5 based on the first embodiment. The wavelength dispersion device 1002 is configured such that the turnback mirror 106 is removed from the wavelength dispersion device 100 according to Example 1. Fig. 6 is a schematic diagram illustrating a wavelength dispersion device 2001 according to another example of Example 5 based on the first embodiment. The wavelength dispersion device 2001 is configured such that the turnback mirror 106 is removed from the wavelength dispersion device 200 according to Example 4. According to the embodiment, an optical system in which spatially dispersed light propagates in parallel can be configured without a lens.
According to the embodiment, since it is not necessary to include the turnback mirror 106, it is possible to achieve low cost.

<Second embodiment

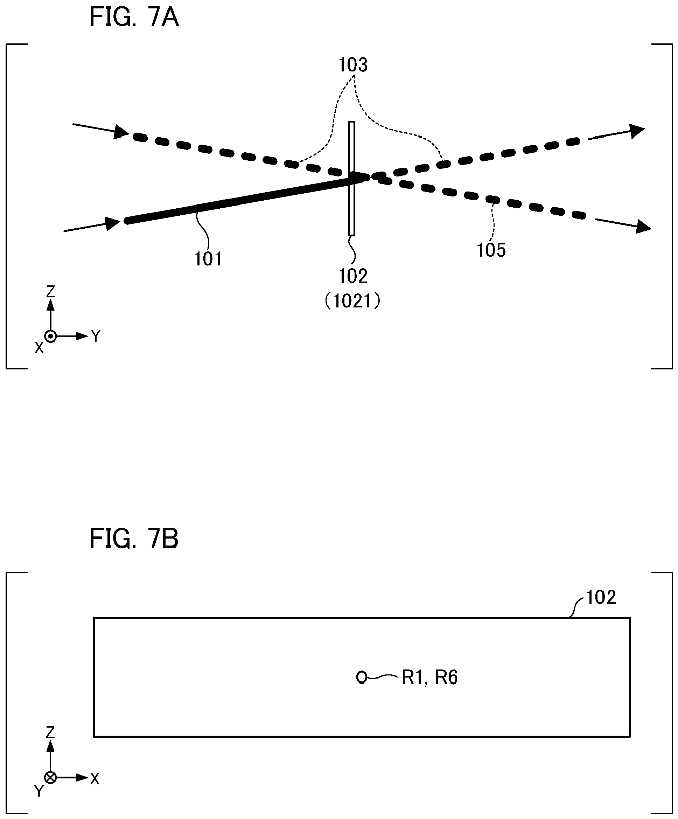

Next, a wavelength dispersion device according to a second embodiment will be described with reference to Figs. 7A and 7B. Figs. 7A and 7B are diagrams illustrating incidence positions of the incident light 101 and the dispersed light 103 on the surface of the dispersion element 102 according to the second embodiment. Fig. 7A is a diagram illustrating the dispersion element 102 when viewed in the X direction. Fig. 7B is a diagram illustrating the dispersion element 102 when viewed in the Y direction. In the first embodiment, propagation optical axes of the incident light 101 and the dispersed light 103 are parallel and the light propagates at different heights on the dispersion element 102. As illustrated in Figs. 7A and 7B, in the second embodiment, the incident light 101 and the dispersed light 103 overlap at least partially on the surface of the dispersion element 102 and are incident on the dispersion element 102 at different angles in a direction perpendicular to a dispersion direction and a light propagation direction. In other words, the dispersed light 103 is incident on the dispersion element 102 to overlap the incident light 101 in the horizontal and vertical directions at least partially on the surface of the dispersion element 102.
According to the embodiment, the width of the dispersion element 102 in the vertical direction can be narrowed. Thus, it is possible to realize a thinner wavelength dispersion device. By reducing the size of the dispersion element, it is possible to achieve low cost.

(Example 6)

In this example, the same element as that of Example 1 has been used. Here, differences in disposition of an element and optical axes will be described below. The disposition of a wavelength dispersion device according to this example is substantially the same as the disposition of the wavelength dispersion device 200 illustrated in Fig. 4. The surface of the diffraction grating 1021 which is the dispersion element 102 is disposed to be perpendicular with respect to the horizontal. The incident light 101 is incident on the diffraction grating 1021 at an upward angle of 0.25 degrees with respect to the horizontal. The incident light 101 is incident at about 63.5 degrees on a groove structure of the diffraction grating. The dispersed light 103 is circulated by the light guiding optical system 104 and is radiated to the diffraction grating 1021 again. In the light guiding optical system 104, four mirrors which are the first mirror 1041, the second mirror 1042, the third mirror 1043, and the fourth mirror 1044 are used. In this example, unlike Example 1, the first mirror 1041 to the fourth mirror 1044 are disposed so that the dispersed light 103 propagates around one direction in the horizontal direction rather than the vertical direction of the diffraction grating 1021. The fourth mirror 1044 is adjusted so that parts of the dispersed light 103 and the incident light 101 overlap in the horizontal and vertical directions on the surface of the dispersion element 102 and the dispersed light 103 is reflected. At this time, the dispersed light 103 is adjusted such that it is radiated to the diffraction grating 1021 at a downward angle of 0.25 degrees with respect to the horizontal.

As in Example 1, the dispersed light 103 radiated to the diffraction grating 1021 is emitted as the parallel light 105 and is reflected by the turnback mirror 106. At this time, the light is reflected with no change in an angle in the horizontal direction and is reflected downwards at only 0.25 degrees in the vertical direction. The reflected light propagates slightly below the optical path in which the light travels toward the turnback mirror 106 and propagates twice more through the diffraction grating 1021. The light has a spot diameter equal to that of the incident light 101 again. Since the light is reflected downwards by only 0.5 degrees with respect to the incident light by the turnback mirror 106, the light propagates downwards by about 7 mm with respect to the incident light in the diffraction grating 1021. Further, the incident light is not blocked and the light is reflected to obtain the emitted light 110 due to the edge mirror 109 provided at a position 50 mm away from the diffraction grating 1021.

According to this example, it is possible to narrow a diffraction grating width in the vertical direction further than in the first embodiment. In this example, the light incident on the diffraction grating 1021 at an angle at which the incident light 101 and the dispersed light 103 are symmetric on the horizontal plane, but the present invention is not limited to a symmetric angle. When the present invention is not limited to the symmetric angle, ease of assembly is improved.

<Third embodiment

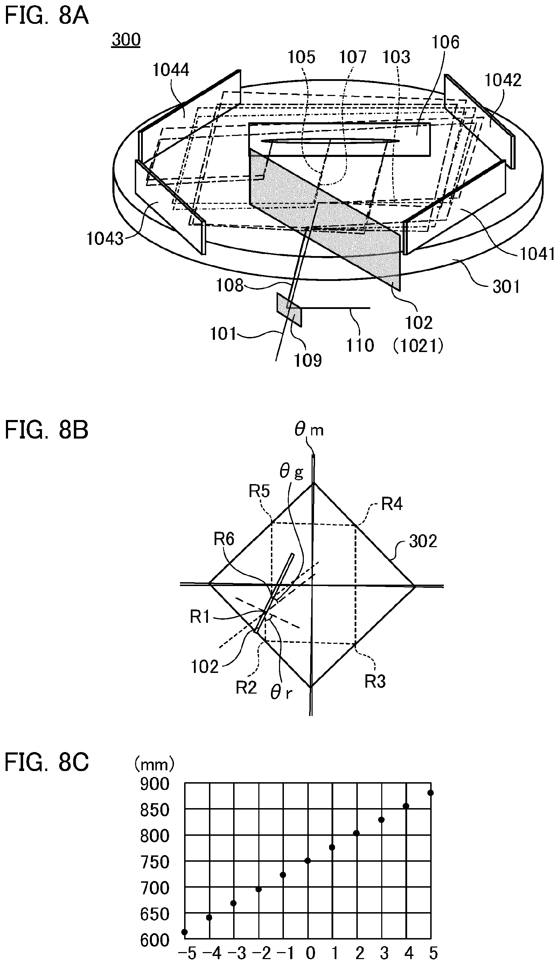

Figs. 8A to 8C are diagrams illustrating a wavelength dispersion device 300 according to a third embodiment and Example 7. Fig. 8A is a schematic diagram illustrating the wavelength dispersion device 300 according to the third embodiment and Example 7. In Fig. 8A, an optical path of a central wavelength is indicated by a dotted line. In the embodiment, a rotational mechanism 301 that rotates all of a plurality of reflection surfaces of the light guiding optical system 104 is further included. In the embodiment, the rotational mechanism 301 is, for example, a stage which can be driven. By rotating the stage in which the first mirror 1041 to the fourth mirror 1044 are disposed about a rotational axis, it is possible to change the optical path length of the dispersed light 103. Here, an example of the dispersion element 102 is assumed to be the diffraction grating 1021.

A principle that an optical path length of the dispersed light 103 is changed will be described by exemplifying a case in which a rectangular light guiding optical system is configured using four reflection elements, the first mirror 1041 to the fourth mirror 1044. Fig. 8B is a diagram illustrating the principle that the optical path length of the dispersed light 103 is changed. R1 indicates a point at which incident light is incident on the dispersion element 102. R2, R3, R4, and R5 respectively indicate points at which the diffracted dispersed light 103 is reflected from first to fourth reflection surfaces (the first mirror 1041, the second mirror 1042, the third mirror 1043, and the fourth mirror 1044). R6 indicates a point at which the dispersed light 103 is incident on the dispersion element 102. P1, P2, P3, and P4 indicate intersections of extended reflection surfaces of the four reflection elements, that is, vertexes of a rectangle 302. $\theta_m$ indicates an angle at which the entire rectangle is rotated. $\theta_r$ indicates an angle of the diffracted light. It is assumed that the rectangle is a square and the length of one side is a. $\theta_g$ indicates an angle between incident light and the diffraction grating on xy coordinate axes. That is, an incidence angle on the diffraction grating is $90° - \theta_g$.

From the above description, the coordinates of each point are as follows.

[Expression 1]

$$P1 : \left( \frac{a}{\sqrt{2}} \cos \theta_m , \frac{a}{\sqrt{2}} \sin \theta_m \right)$$

[Expression 2]

$$P2 : \left( \frac{a}{\sqrt{2}} \sin(-\theta_m) , \frac{a}{\sqrt{2}} \cos \theta_m \right)$$

[Expression 3]

$$P\,3\,:\,\left(-\frac{a}{\sqrt{2}}\cos\theta_m,-\frac{a}{\sqrt{2}}\sin\theta_m\right)$$

[Expression 4]

$$P\,4\,:\,\left(-\frac{a}{\sqrt{2}}\sin(-\theta_m),-\frac{a}{\sqrt{2}}\cos\theta_m\right)$$

[Expression 5]

$$R\,1\,:\,(x_0,\,0\,)$$

[Expression 6]

$$R\,2\,:\,\left(x_0,\,\frac{-\cos\theta_m+\sin\theta_m}{-\sin(-\theta_m)+\cos\theta_m}\times\left(x_0+\frac{a}{\sqrt{2}}\sin(-\theta_m)\right)-\frac{a}{\sqrt{2}}\cos\theta_m\right)$$

[Expression 7]

$$R\,3\,:\,\left(\frac{y-y_{R2}}{\tan(2\theta_m)}+x_{R2},\,\frac{\cos\theta_m+\sin\theta_m}{\sin(-\theta_m)+\cos\theta_m}\times\left(x-\frac{a}{\sqrt{2}}\sin\theta_m\right)+\frac{a}{\sqrt{2}}\cos\theta_m\right)$$

[Expression 8]

$$R\,4\,:\,\left(x_{R3},\,\frac{\sin\theta_m-\cos\theta_m}{\cos\theta_m-\sin(-\theta_m)}\times\left(x-\frac{a}{\sqrt{2}}\sin(-\theta_m)\right)+\frac{a}{\sqrt{2}}\cos\theta_m\right)$$

[Expression 9]

$$R\,5\,:\,\left(\frac{y-y_{R4}}{\tan(2\theta_m)}+x_{R4},\,\frac{\cos\theta_m+\sin\theta_m}{\sin(-\theta_m)+\cos\theta_m}\times\left(x+\frac{a}{\sqrt{2}}\sin\theta_m\right)-\frac{a}{\sqrt{2}}\cos\theta_m\right)$$

[Expression 10]

$$R\,6\,:\,\left(x_{R5},\,\tan(\theta_g)\times(x-x_{R1})\right)$$

Accordingly, a length from R1 to R6 changes in accordance with the angle θm.

The lengths from R1 to R6 is equivalent to the optical path length of the dispersed light 103. That is, by causing the rotational mechanism 301 to rotate the entire light guiding optical system 104, it is possible to change the optical path length of the dispersed light 103.

According to the embodiment, it is possible to adjust the dispersion through the rotation rather than by changing the distance between the reflection elements. Thus, the light guiding optical system is not split and stable adjustment is possible without deviation or the like of the optical axes.

By rotating at least two surfaces among the plurality of reflection surfaces of the light guiding optical system 104 about the rotational axis, it is possible to change the optical path length of the dispersed light 103. For example, of three reflection surfaces, one surface may be fixed and the other two surfaces may be rotated about the rotational axis. In the case of such a configuration, for example, it is possible to miniaturize the stage or the like and miniaturize the entire device. By reducing the number of reflection surfaces, it is possible to reduce a reflection loss.

(Example 7)

A specific example of a change in an optical path length of the dispersed light 103 by the rotational mechanism 301 will be described. Fig. 8C is a diagram illustrating an example of a change in the optical path length of the dispersed light 103 using the rotational mechanism 301. The optical path length of the dispersed light 103 is changed as in Fig. 8C by causing the rotational mechanism 301 to rotate the entire light guiding optical system 104. Here, a length a of one side of a square is set to 265 mm. At this time, when the angle $\theta m$ is 0 degrees, the optical path length is about 750 mm. When the configuration of Example 1 is used, a distance of the diffraction grating which is in parallel is about 317 mm and the optical path length is substantially the same as 745 mm. When the angle $\theta m$ is changed from -5 degrees to +5 degrees, the optical path length can be changed from 612 mm to 880 mm.

<Fourth embodiment>

In the embodiment, an element that compensates for a high-order dispersion component is inserted into a spot in which the light is parallel light, that is, a portion in which the incident light 101 or the parallel light 105 propagates. As the element that compensates for a high-order dispersion component, there is a medium that transmits light or has material dispersion, an element that combines the transmission of light and the material dispersion, a prism dispersion compensation element, or the like. Alternatively, the element is an element that can control a wavelength dispersion amount by reflecting light as in a chirp mirror. According to the embodiment, it is possible to control a pulse width (pulse time width) or control chirp with more detail.

<Fifth embodiment>

In the embodiment, a wavelength dispersion device that gives normal dispersion is realized by disposing a lens in the optical path along which the dispersed light 103 propagates. In the diffraction grating 1021, only abnormal dispersion is given. However, by using a lens or a condensing mirror, it is possible to give normal dispersion even to a pair of diffraction gratings. Accordingly, according to the embodiment, it is possible to provide the wavelength dispersion device that gives the normal dispersion.

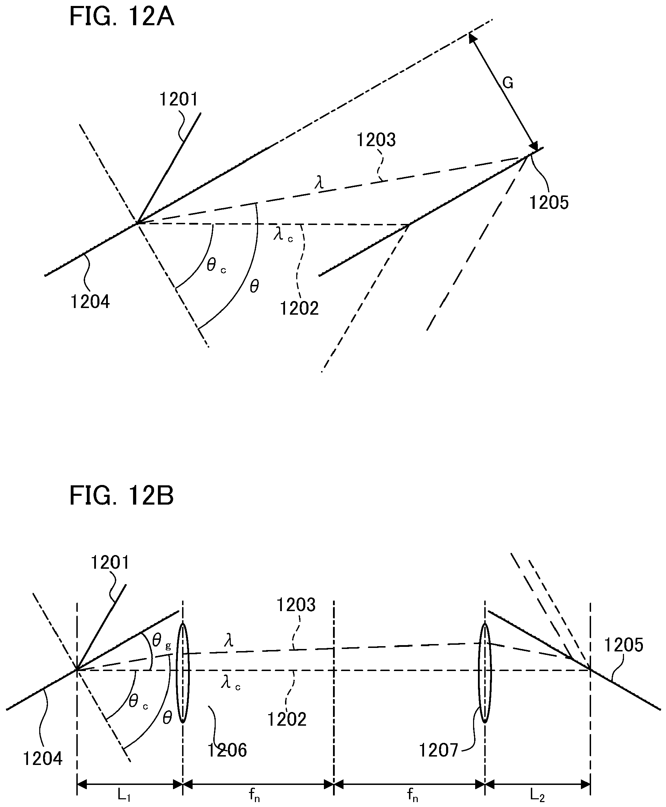

Figs. 12A and 12B are schematic diagrams illustrating the principles that give abnormal dispersion and normal dispersion. First, the principle for giving abnormal dispersion will be described with reference to Fig. 12A. Incident light 1201 is incident on a first diffraction grating 1204. Here, for diffraction angles of the first diffraction grating 1204, $\theta c$ is a diffraction angle of light 1202 with a central wavelength $\lambda c$ and $\theta$ is a diffraction angle of light 1203 with a certain wavelength $\lambda$. Light diffracted by the first diffraction grating 1204 propagates to a second diffraction grating 1205 disposed parallel to the first diffraction grating 1204. In this case, a phase difference $\phi(\lambda)$ of the light diffracted by the second diffraction grating 1205 is expressed as in Expression of [Expression 11] below.

[Expression 11]

$$\varphi(\lambda) = \frac{2\pi}{\lambda} \cdot \frac{G}{\cos(\theta_c)} \cdot (\cos(\theta - \theta_c) + C.C.)$$

Next, the principle that gives normal dispersion will be described with reference to Fig. 12B. Unlike Fig. 12A, the first diffraction grating 1204 and the second diffraction grating 1205 are disposed to be symmetric rather than being parallel. Here, when a first lens 1206 and a second lens 1207 with a focal distance fn are disposed at positions L1 and L2 from the first diffraction grating 1204 and the second diffraction grating 1205, the phase difference $\phi(\lambda)$ is expressed as in Expression of [Expression 12] below.

[Expression 12]

$$\varphi(\lambda) = \frac{2\pi}{\lambda} \cdot \frac{(2f_n - (L_1 + L_2)) \cdot \sin(\theta_g)}{\cos(\theta_c)} \cdot (-\cos(\theta - \theta_c) + C.C.)$$

Here, $\theta_g$ is an angle of the diffraction grating with respect to a propagation optical axis of a central wavelength $\lambda_c$.

As can be understood by comparing Expressions 11 and 12, a relation between the abnormal dispersion and the normal dispersion can be reversed by adjusting the distances L1 and L2 from the lenses of the diffraction gratings.

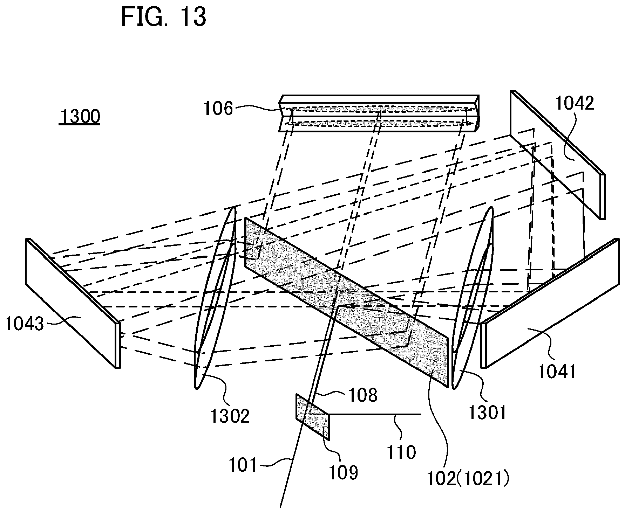

Fig. 13 is a schematic diagram illustrating a wavelength dispersion measurement device 1300 according to a fifth embodiment. In the embodiment, in a configuration illustrated in Fig. 13, a miniaturized wavelength dispersion device that gives normal dispersion can be provided by reducing the number of diffraction gratings which are used. In the wavelength dispersion measurement device 1300, for example, the same element as that of Example 2 based on the first embodiment is used. In the wavelength dispersion measurement device 1300, three reflection mirrors are used and lenses 1301 to 1302 are inserted between the diffraction grating 1021 and the first mirror 1041 and between the third reflection mirror 1043 and the diffraction grating. An element that spatially disperses light is not limited to the diffraction grating and an element such as a prism or a grism may be used. In this case, the angles of the reflection mirrors or the number of reflection mirrors may be designed in accordance with an angle of the surface of the prism or the grism. In this configuration, it is possible to provide the wavelength dispersion device that gives normal dispersion.

<Sixth embodiment>

The embodiment is an embodiment of a laser processing device in which the above-described wavelength dispersion device is used. The laser processing device according to the embodiment performs processing while adjusting the width of a laser pulse. A processing device 500 according to the embodiment can perform laser processing while switching between thermal processing and non-thermal processing using one pulse light source. By controlling a direction of dispersion, it is possible to switch between processing for radiation with a short wavelength and processing for radiation with a long wavelength. Thus, it is possible to perform processing in which thermal generation is controlled through absorption of a material.

Further, by controlling the generation in conjunction with a laser output, it is possible to perform the laser processing in which the width of a pulse is controlled without changing a peak-to-peak value of a short pulse.

(Example 8)

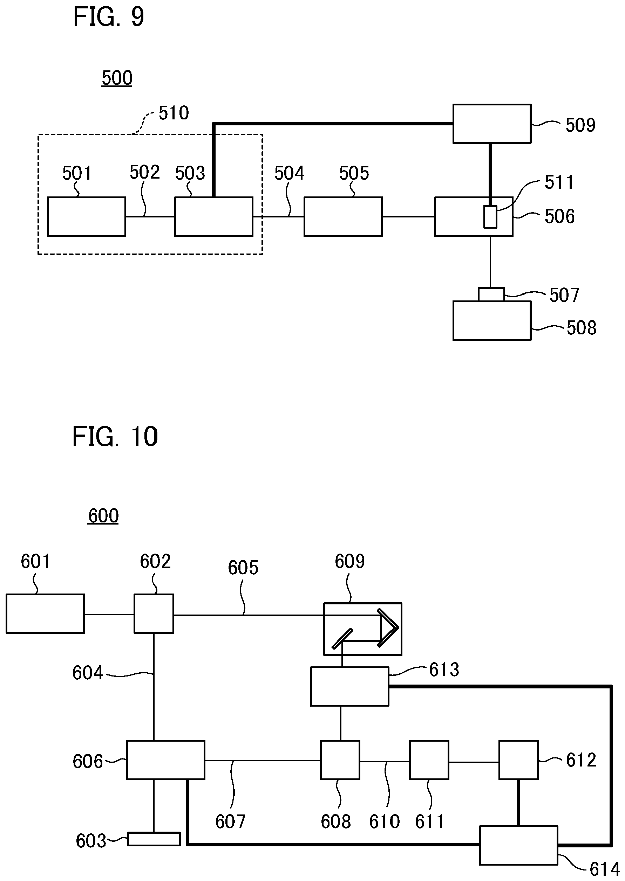

An example based on the sixth embodiment will be described with reference to Fig. 9. Fig. 9 is a schematic diagram illustrating a processing device 500 according to Example 8 based on the sixth embodiment. The processing device 500 includes a pulse control device 510, a scanner light guiding optical system 505, a laser processing scanner (a laser scanner) 506, a stage 508, and a PC 509.

The pulse control device 510 includes a light source 501 and a wavelength dispersion device 503. The light source 501 is, for example, an ultra-short pulse laser light source. A pulse laser beam 502 output from the light source 501 is incident on the wavelength dispersion device 503 and a pulse width, a dispersion amount, and a dispersion direction of the pulse laser beam 502 are controlled. Thus, the pulse time width and pulse peak intensity of the pulse laser beam 502 are controlled. The wavelength dispersion device 503 is controlled by the PC 509.

The beam 504 of which dispersion is controlled propagates in the scanner light guiding optical system 505, a beam diameter is controlled, and the beam is incident on the laser processing scanner 506. The laser processing scanner 506 processes a target 507 by scanning a laser while changing at least one of the pulse time width and the pulse peak intensity with pulse energy maintained. The laser processing scanner 506 includes an adjustment unit 511 that adjusts a planar position, a height direction, and a radiation angle of a condensed beam spot for the target 507. The adjustment unit 511 adjusts an output of the laser by adjusting the planar position, the height direction, and the radiation angle of the condensed beam spot. Here, the laser processing scanner 506 controls the planar position, the height direction, and the radiation angle of the condensed beam spot by setting the controlled beam 504 to a condensed diameter of 20 $\mu$ meters. The target 507 is fixed on the stage 508. The material of the target 507 is, for example, a metal and has a thickness of 1 mm in this example. An operation of the laser processing scanner 506 is controlled by the PC 509. The condensed beam spot is first scanned with a circular shape with a diameter of 180 $\mu$ meters and has a pulse width of 10 ps. In this way, a hole is made at a high speed in a state close to that in thermal processing. Subsequently, the condensed beam spot is scanned with a circular shape with a diameter of 200 $\mu$ meters. At this time, dispersion of the beam is controlled by the wavelength dispersion device 503 so that the beam has a pulse width of 500 fs. In this way, non-thermal processing is performed and the laser processing with no thermal-sagging is performed.

In the example, the wavelength dispersion device 503 and the laser processing scanner 506 are controlled by the PC 509, but each of the wavelength dispersion device 503 and the laser processing scanner 506 may include a control unit and the wavelength dispersion device 503 and the laser processing scanner 506 may be controlled by the PC 509 via each control unit.

According to this example, it is possible to realize laser processing with a small thermal influence at a high speed.

<Seventh embodiment>

The embodiment is an embodiment of optical coherence tomography (OCT) in which the above-described wavelength dispersion device is used. In the optical coherence tomography according to the embodiment, dispersion of reference light and light radiated to a sample is controlled.

Fig. 10 is a schematic diagram illustrating an optical coherence tomography 600 according to a seventh embodiment. The optical coherence tomography 600 includes a light source 601, a light splitting element 602, a light scanning device 606, a light superimposing element 608, an optical path length adjustment device 609, an optical dispersion element 611, a wavelength dispersion device 613, and a PC 614.

As illustrated in Fig. 10, in the optical coherence tomography 600, the light splitting element 602 is used to split light emitted from the light source 601 into signal light (radiated light) 604 to be radiated to a sample 603 and reference light 605. The signal light 604 is scanned on the sample 603 by the light scanning device 606. An operation of the light scanning device 606 is controlled by the PC 614 and radiation angle or radiation position information of the signal light 604 is monitored by the PC 614.

Backscattered light 607 radiated to the sample 603, scattered, and returned is condensed to propagate to the light superimposing element 608. On the other hand, the reference light 605 propagates in the optical path length adjustment device 609 and is incident on the light superimposing element 608 so that a length of the propagation of the reference light 605 substantially matches an optical path length from the light splitting element 602 to the light superimposing element 608 through the sample 603. In the light superimposing element 608, the backscattered light 607 and the reference light 605 are superimposed to generate interference light 610. The interference light 610 is spatially dispersed by the optical dispersion element 611 such as a diffraction grating and is detected as a spectral interference signal by a line sensor 612. The detected spectral interference signal is acquired by the PC 614 and is subjected to Fourier transform to obtain a tomographic signal. The tomographic signal is integrated with angle information of the light scanning device 606 to generate a photographic image.

A tomographic resolution of the tomographic signal is determined in accordance with a spectral width of the light source. When the dispersion amounts of the backscattered light 607 and the reference light 605 are the same, it is possible to obtain the theoretically highest resolution. Accordingly, the wavelength dispersion device 613 is disposed in an optical path (a light guiding path) of the light splitting element 602 and the light superimposing element 608 in which the reference light 605 propagates to control the dispersion amount of the reference light 605. The wavelength dispersion device 613 is controlled by the PC 614. The dispersion amount of a wavelength is controlled so that the obtained tomographic signal is greater than a predetermined value. That is, the dispersion amount is controlled so that a signal-to-noise ratio of an interference signal is greater than a predetermined value. The dispersion amount of the wavelength is preferably controlled so that the obtained tomographic signal has the highest resolution.

According to the embodiment, it is possible to realize the OCT with the high resolution. It is possible to obtain the tomographic signal adjusted in accordance with the thickness or the material of a measurement target sample.

<Eighth embodiment>

The embodiment is an embodiment of a device (a wavelength dispersion measurement device) that measures a thickness or refractive index dispersion of a material through which light transmits by using an interferometer according to the seventh embodiment.

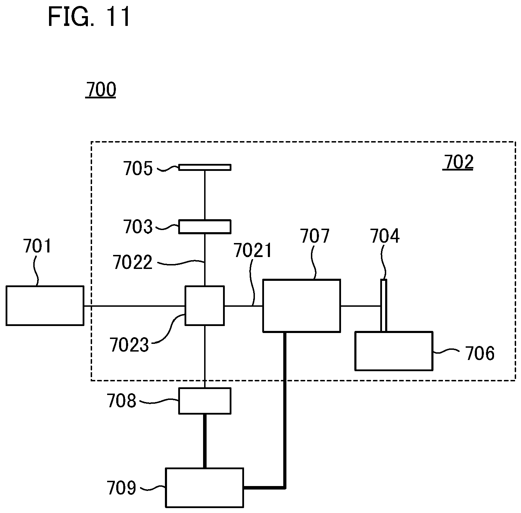

Description will be made with reference to Fig. 11. Fig. 11 is a schematic diagram illustrating a wavelength dispersion measurement device 700 according to the eighth embodiment. The wavelength dispersion measurement device 700 includes a light source 701, a Michelson interferometer 702, an optical detector 708, and a PC 709.

As the light source 701, a broadband light source that has a broad spectral width is used. Light emitted from the light source 701 is guided to the Michelson interferometer 702. In the Michelson interferometer 702, the light is split into reference light propagating along a reference optical path 7021 and signal light propagating along a signal optical path 7022 by using a light splitting element 7023. A permeable material 703 is disposed on a signal optical path side. The signal light is reflected by a signal light mirror 705 and propagates through the permeable material 703 again. In the Michelson interferometer 702, the reference light and the signal light propagating through the permeable material 703 are superimposed to obtain interference light.

The interference light is received by the optical detector 708 and an interference signal is obtained and received by the PC 709. The reference light is reflected using a reference light mirror 704. The reference light mirror 704 is fitted in a movement stage 706, and thus the length of the reference optical path 7021 is changed. Here, a wavelength dispersion device 707 according to the present invention is inserted in the reference optical path 7021. The wavelength dispersion device 707 includes a mechanism that rotates a reflection element, as described in the third embodiment. A rotational angle is controlled by the PC 709 and the rotational angle is monitored. The dispersion of the reference light is changed and the width of the interference signal is changed by controlling the rotational angle. Accordingly, by analyzing the interference signal, it is possible to evaluate characteristics of the permeable material 703. When the thickness of the permeable material 703 is known, the dispersion amount can be measured. Alternatively, when the dispersion amount of the permeable material 703 is known, the thickness can be measured.

According to the embodiment, it is possible to provide the device that evaluates the characteristics of a permeable material.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An optical device (100; 200; 300; 503; 613; 707; 1001; 1002; 2001) that disperses a wavelength of light, the optical device comprising:

   a dispersion element (102) configured to transmit incident light (101; 1201) and disperse the incident light so that an optical path is different for each wavelength and to generate first dispersed light (103); and
   a reflection unit (104) including four reflection surfaces (1041, 1042, 1043 1044) sequentially reflecting the first dispersed light,
   wherein the first dispersed light sequentially reflected from the four reflection surfaces is incident on the dispersion element and is transmitted through the dispersion element.

2. The optical device according to claim 1, wherein the reflection unit causes the first dispersed light to be incident on the dispersion element so that at least a part of the first dispersed light overlaps the incident light in a direction perpendicular to a direction in which the dispersion element disperses the light on a surface of the dispersion element or inside the dispersion element.

3. The optical device according to claim 1, wherein the reflection unit causes the first dispersed light to be incident on the dispersion element so that at least a part of the first dispersed light overlaps the incident light in a direction in which the dispersion element disperses the light and a direction perpendicular to the direction in which the dispersion element disperses the light on a surface of the dispersion element or inside the dispersion element.

4. The optical device according to any one of claims 1 to 3, wherein the reflection unit includes a rotational mechanism (301) that rotates at least two surfaces among the four reflection surfaces about a rotational axis.

5. The optical device according to claim 4, wherein the rotational mechanism adjusts an optical path length of the first dispersed light by adjusting an angle of the rotation.

6. The optical device according to claim 4, wherein the rotational mechanism adjusts an optical path length of the first dispersed light by rotating the four reflection surfaces integrally.

7. The optical device according to any one of claims 1 to 6, wherein the reflection unit includes a driving mechanism configured to drive at least one surface among the four reflection surfaces and change an optical path length of the first dispersed light.

8. The optical device according to any one of claims 1 to 7, further comprising:
   a reflection element configured to reflect second dispersed light (108) generated when the first dispersed light reflected from the four reflection surfaces and guided to the dispersion element transmits through the dispersion element and to cause the second dispersed light to be incident on the dispersion element.

9. The optical device according to claim 8, wherein the reflection element causes the second dispersed light to be incident on the dispersion element so that at least a part of the second dispersed light overlaps the incident light in a direction in which the dispersion element disperses the light on a surface of the dispersion element or inside the dispersion element.

10. The optical device according to any one of claims 1 to 9, further comprising:
at least one lens (1206; 1207) or condensing mirror disposed between the dispersion element and the reflection surface.

11. A pulse control device (510) comprising:

a pulse laser light source (501);
the optical device according to any one of claims 1 to 10; and
a control unit (509) configured to control the pulse laser light source and the optical device,
wherein the control unit controls at least one of a pulse time width and pulse peak intensity of pulse laser light output from the pulse laser light source by causing the pulse laser light to be incident on the optical device and dispersing a wavelength of the pulse laser light.

12. A processing device (500) comprising:

the pulse control device according to claim 11; and
a laser scanner (506) configured to perform processing by scanning a laser while changing at least one of a pulse time width and pulse peak intensity with pulse energy maintained.

13. The processing device according to claim 12, further comprising:

an adjustment unit (511) configured to adjust an output of the laser,
wherein laser processing is performed by causing the adjustment unit to change at least one of the pulse time width and the pulse peak intensity.

14. An interferometer (600; 702) comprising:

a light source (601; 701) configured to emit light;
a light splitting element (602; 7023) configured to split the light emitted from the light source into reference light and radiated light to be radiated to a measurement target;
a light superimposing element (608) configured to superimpose the reference light with scattered light scattered from the measurement target;
the optical device according to any one of claims 1 to 10; and
a control unit (614; 709) configured to control wavelength dispersion so that a signal-to-noise ratio of an interference signal is greater than a predetermined value by the optical device,
wherein the optical device is disposed in a light guiding path along which the reference light is guided so that the light superimposing element superimposes the reference light with the scattered light.

15. The interferometer according to claim 14, wherein at least one of wavelength dispersion and a thickness of the measurement target is measured based on a dispersion amount controlled by the control unit.

FIG. 1

## FIG. 2A

## FIG. 2B

FIG. 3

# FIG. 4

<u>200</u>

FIG. 5

FIG. 6

FIG. 7A

103

101

102
(1021)

105

Z
X → Y

FIG. 7B

102

○—R1, R6

Z
Y → X

FIG. 8A

FIG. 8B

FIG. 8C

FIG. 9

500

501  502  503  504  505  506  509  511  507  508  510

FIG. 10

600

601  602  605  609  604  606  607  608  610  611  612  613  614  603

FIG. 11

FIG. 12A

FIG. 12B

## FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007067123 A